# FASCICULE DE BREVET EUROPEEN

(11) **EP 0 772 749 B1**
(45) Date de publication et mention de la délivrance du brevet: **06.05.1998**
(21) Numéro de dépôt: 95925029.1
(22) Date de dépôt: 10.07.1995
(51) Int. Cl.: F16D 55/224, F16D 65/092

(54) **PATIN ET FREIN A DISQUE L'UTILISANT**
BREMSBELAG UND HIERMIT AUSGERÜSTETE SCHEIBENBREMSE
BRAKE PAD AND DISC

(30) Priorité: 28.07.1994 FR 9409342
(43) Date de publication de la demande: 14.05.1997
(73) Titulaire: BOSCH SISTEMAS DE FRENADO, S.L., 28037 Madrid (ES)
(72) Inventeur: CORTES GUASCH, Esteve, 126, rue de Stalingrad, 93700 Drancy (FR); SIMON BACARDIT, Juan, 126, rue de Stalingrad, 93700 Drancy (FR); VILA BOLUDA, Josep, Manuel, 126, rue de Stalingrad, 93700 Drancy (FR)
(74) Mandataire: Bentz, Jean-Paul
(86) Numéro de dépôt international: FR9500918
(87) Numéro de publication internationale: WO9603595

(56) Documents cités:
- EP-A- 0 347 523
- GB-A- 2 036 898
- GB-A- 2 147 069
- US-A- 4 044 864

## Description

La présente invention concerne un dispositif de freinage pour véhicule à moteur, incluant au moins un patin à deux faces sensiblement planes dont la première est partiellement recouverte, dans une plage centrale, d'un matériau de friction, ce patin comportant en outre, de part et d'autre de cette plage centrale, deux oreilles latérales présentant chacune, suivant une première direction sensiblement perpendiculaire à une seconde direction joignant ces oreilles, une largeur relativement importante, la plage centrale étant reliée aux deux oreilles par des zones de liaison respectives présentant, suivant la première direction, une largeur relativement faible de sorte que chaque oreille présente en dehors de la zone de liaison une périphérie supérieure à la largeur de cette zone.

Des dispositifs conformes à cette définition, qui englobe un certain nombre de freins à disques, sont bien connus dans l'art antérieur comme le montre par exemple le document US-4 044 864.

Un problème très ancien qui se pose dans les freins à disque, en particulier ceux qui utilisent des patins du type précédemment identifié, est celui du retour de l'étrier dans sa position de repos après l'actionnement du frein.

En effet, il arrive fréquemment que le patin qui se trouve en regard de la face du disque opposée à celle vers laquelle est tourné le piston frotte sur le disque même lorsque le frein n'est pas actionné et s'use prématurément tout en ralentissant indûment le véhicule.

L'invention se situe dans ce contexte et a pour but de proposer un dispositif de freinage qui, bien que de structure simple, résolve le problème du retour de l'étrier dans sa position de repos dès que le frein est relâché.

A cette fin, le frein de l'invention, par ailleurs conforme au préambule ci-dessus, est essentiellement caractérisé en ce que chaque oreille de patin est de forme circulaire et porte, sur sa seconde face au moins, un ressort latéral de patin, qui prend essentiellement la forme d'une étoile comportant au moins trois branches, qui est relié à cette oreille par sa partie centrale et qui déborde de la périphérie de cette oreille en au moins deux points espacés l'un de l'autre le long de cette périphérie.

De préférence, le dispositif de freinage de l'invention comprend des premier et second patins de friction du type précédemment défini, et est caractérisé en ce qu'il comprend en outre : deux éléments de frein mobiles l'un par rapport à l'autre, dont l'un est un étrier chevauchant un disque de frein, et dont l'autre est une chape fixée au véhicule; des moyens de serrage comprenant un cylindre prenant appui sur l'étrier et présentant en regard d'une première des deux faces du disque une ouverture fermée par un piston; et des moyens de guidage permettant un coulissement de l'étrier par rapport à la chape lors d'un actionnement des moyens de serrage, les premier et second patins de friction étant respectivement tournés vers les première et seconde faces du disque, étant enserrés entre le piston et l'étrier, et étant déplacés suivant une troisième direction par actionnement des moyens de serrage pour être appliqués sur le disque, et en ce que les oreilles de l'un au moins des patins sont encastrées dans des logements respectifs de la chape, dont chacun s'étend suivant la troisième direction et présente une ouverture tournée vers la seconde direction et de dimension inférieure à celle de la largeur de l'oreille qu'il reçoit.

Il est par exemple possible de prévoir que le cylindre soit engagé dans une bague solidaire de la chape, et par rapport à laquelle ce cylindre peut coulisser sous l'effet d'un effort de freinage.

L'étrier peut alors être accroché de façon amovible au second patin pour être solidaire de ce dernier suivant la première direction, radialement par rapport au disque, les oreilles du second patin, de préférence de forme circulaire, étant engagées dans lesdits logements de la chape.

Pour solidariser l'un à l'autre le second patin et l'étrier, ce dernier peut présenter une fente s'étendant suivant la troisième direction, le second patin présentant au moins une protubérance traversant cette fente, et un ressort central accroché sur cette protubérance prenant appui sur un bord de la fente.

Dans ces conditions, il est possible de prévoir que l'étrier repose librement sur la bague.

De préférence, chaque ressort latéral de patin prend essentiellement la forme d'une étoile comportant au moins trois branches, et ce ressort en étoile est riveté en son centre au patin au moyen d'un rivet présentant un rebord distant du ressort dans la position de repos de ce dernier, et servant à limiter la déformation de ce ressort.

Enfin, chaque oreille de patin est de préférence protégée par une coupelle cylindrique réalisée en un matériau inoxydable et maintenue sur la première face du patin.

D'autres caractéristiques et avantages de l'invention ressortiront clairement de la description qui en est faite ci-après, à titre indicatif et nullement limitatif, en référence aux dessins annexés, dans lesquels:
- la figure 1 est, pour sa partie droite, une vue en coupe partielle, faite suivant la ligne I-I de la figure 11, d'un dispositif de freinage complet, conforme à l'invention, et, pour sa partie gauche, une vue externe de ce dispositif suivant l'incidence de la flèche I de la figure 11 ;
- la figure 2 est une vue externe d'un dispositif de freinage complet, conforme à l'invention, suivant l'incidence de la flèche II de la figure 11;
- les figures 3 à 7 illustrent, dans différentes positions, un patin conforme à l'invention, tel qu'il est vu en coupe au niveau d'un de ses ressorts latéraux;
- la figure 8 est une vue en perspective d'un ressort latéral de patin conforme à l'invention;
- la figure 9 est une vue en perspective de la chape d'un dispositif de freinage conforme à l'invention;
- la figure 10 est une vue en perspective de l'étrier d'un dispositif de freinage conforme à l'invention, vu du côté indiqué par la flèche II de la figure 11;
- la figure 11 est une vue en coupe d'un dispositif de freinage conforme à l'invention; et
- la figure 12 est une vue en perspective de l'étrier d'un dispositif de freinage conforme à l'invention, vu du côté de son nez;

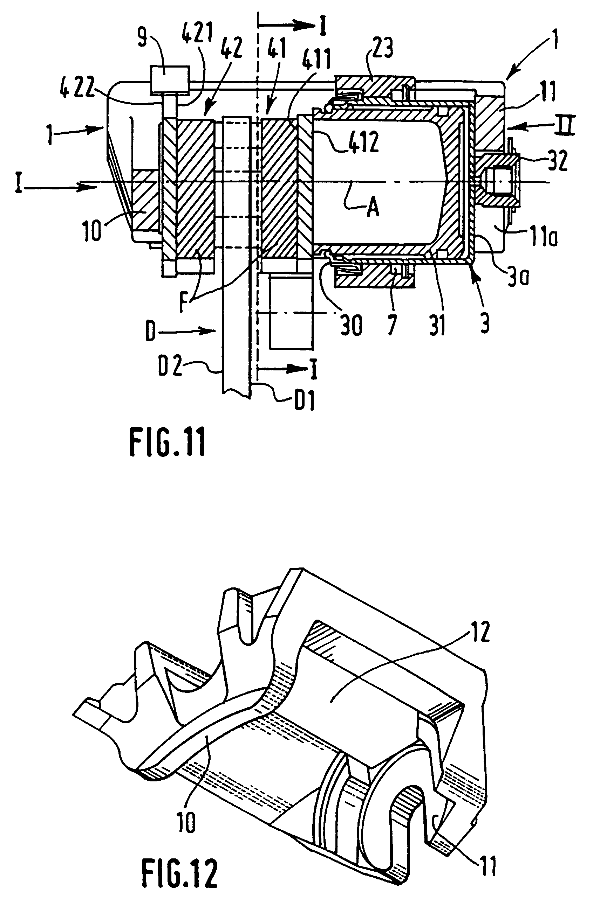

Comme le montrent les figures, l'invention concerne de façon générale un frein à disque, un tel frein comprenant classiquement : deux éléments de frein mobiles l'un par rapport à l'autre, dont l'un est un étrier 1 chevauchant un disque de frein D (figure 11), et dont l'autre est une chape 2 fixée au véhicule; des moyens de serrage comprenant un cylindre 3 prenant appui sur l'étrier 1 et présentant en regard d'une première face D1 du disque D une ouverture 30 fermée par un piston 31; des moyens de guidage, qui seront précisés ultérieurement et qui permettent un coulissement de l'étrier 1 par rapport à la chape 2 lors d'un actionnement des moyens de serrage, et des premier et second patins de friction 41 et 42.

Ces premier et second patins de friction 41 et 42 sont respectivement tournés vers les première et seconde faces D1 et D2 du disque D (figure 11), sont enserrés entre le piston 31 et le nez 10 de l'étrier 1, et sont suceptibles d'être déplacés suivant une direction A, axiale par rapport au disque, par une augmentation de pression dans le cylindre 3, grâce à laquelle le piston 31 d'une part, et le nez 10 de l'étrier 1 d'autre part les appliquent sur le disque D.

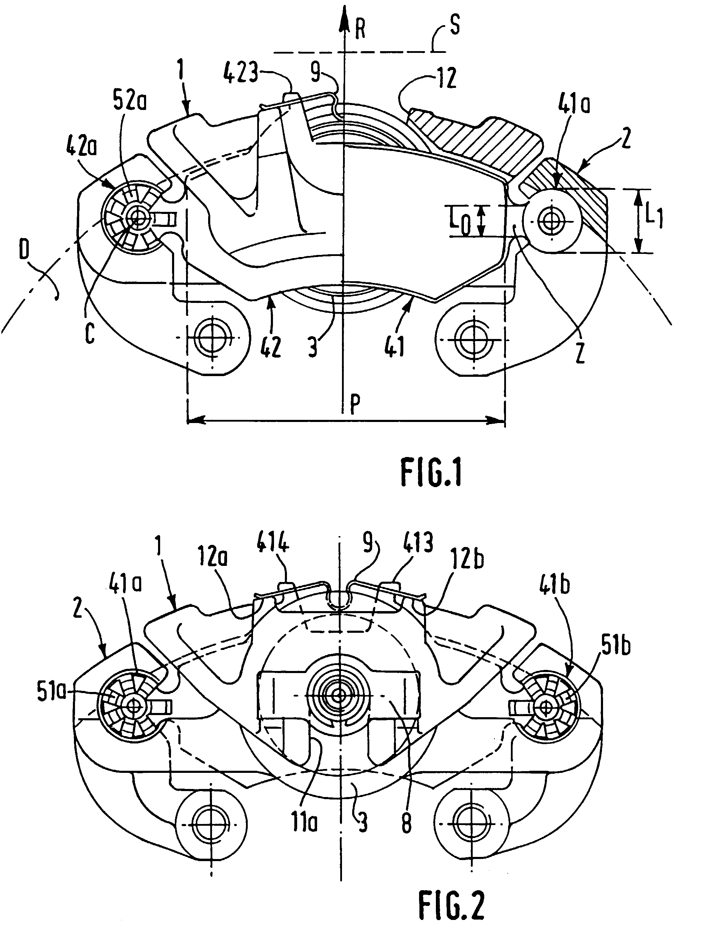

Chaque patin, tel que 41 ou 42, comporte deux faces sensiblement planes telles que 411, 412, et 421, 422, dont la première 411, 421 est partiellement recouverte, dans une plage centrale P (figure 1), d'un matériau de friction F.

Chaque patin comporte en outre, de part et d'autre de cette plage centrale P, deux oreilles latérales de forme circulaire, telles que 41a, 41b et 42a, 42b, dont chacune présente (figure 1), suivant une direction R sensiblement radiale par rapport au disque, donc sensiblement perpendiculaire à la direction S d'une sécante au disque qui joint ces oreilles, une largeur L1 relativement importante, la plage centrale P étant reliée aux deux oreilles par des zones de liaison Z respectives présentant, suivant la direction radiale R, une largeur Lo relativement faible.

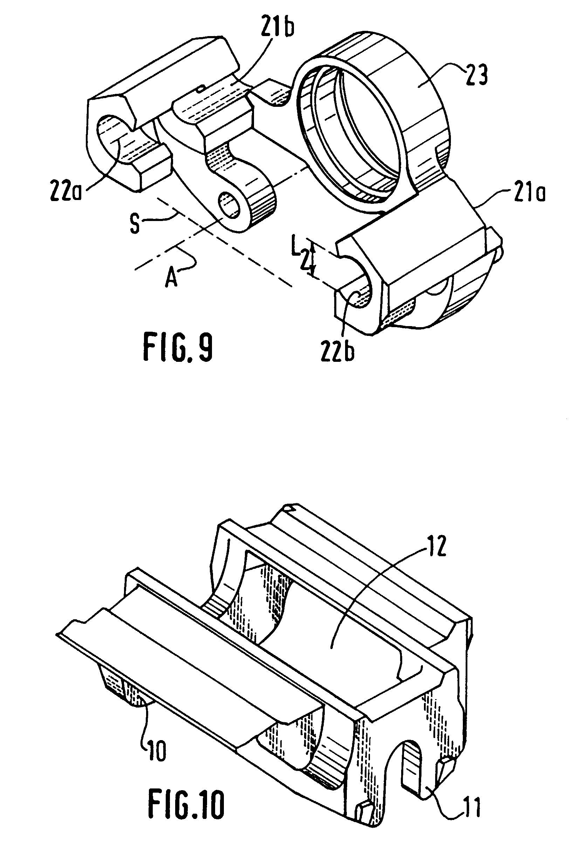

Dans ces conditions, chaque oreille présente, en dehors de sa zone de liaison Z, une périphérie supérieure à la largeur Lo de cette zone, et peut être encastrée dans un logement correspondant de la chape, tel que 21a, 21b, 22a, ou 22b (figure 9), qui s'étend suivant la direction axiale A et qui présente une ouverture tournée vers la direction sécante S et de dimension L2 inférieure à celle de la largeur L1 de l'oreille qu'il reçoit.

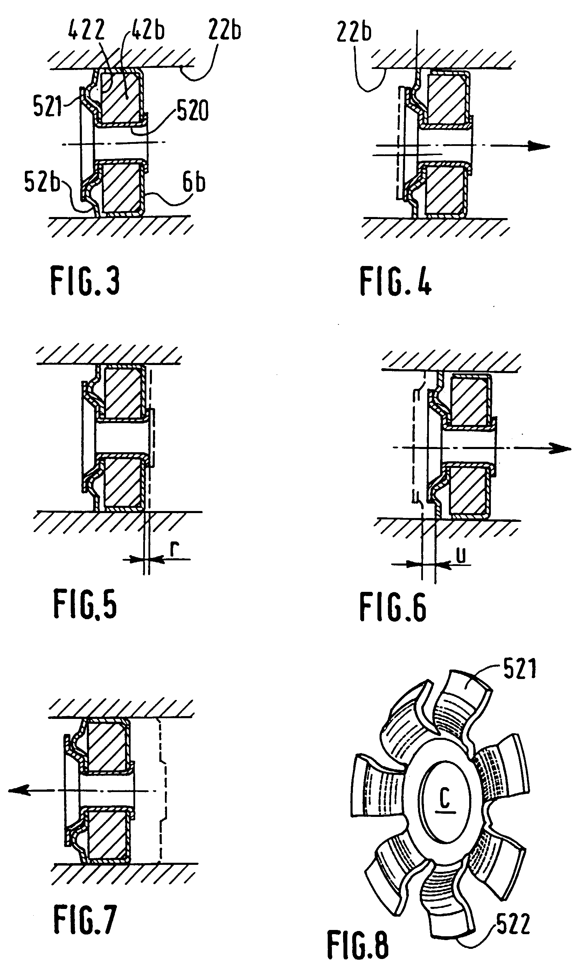

Selon l'invention, chaque oreille porte, au moins sur la seconde face telle que 412 ou 422 du patin, un ressort latéral, tel que 51a, 51b, 52a, et 52b, qui est relié à cette oreille par sa partie centrale C (figure 8) et qui déborde de la périphérie de cette oreille en au moins deux points tels que 521, 522, espacés l'un de l'autre le long de cette périphérie.

Comme le montre la figure 8, chaque ressort de patin prend de préférence la forme d'une étoile comportant au moins trois branches, et en l'occurrence sept.

Chaque ressort latéral de patin (figures 3 à 7) est de préférence maintenu en son centre sur le patin au moyen d'un rivet tel que 520, qui traverse l'oreille du patin en son centre.

Comme le montrent les figures 3 à 7, le rivet 520 présente avantageusement, du côté du ressort 52b au moins, un rebord 521 distant du ressort dans la position de repos de ce dernier, et servant à limiter la déformation de ce ressort.

Plus précisément, la figure 3 illustre l'état de repos du patin 42. En cas d'actionnement du frein (figure 4), ce patin est sollicité dans la direction de la flèche et le ressort latéral 52b, qui prend appui sur l'intérieur du logement 22b, ne suit l'oreille dans son mouvement qu'avec un retard résultant de la déformation élastique de ce ressort, qui l'oblige à s'appuyer sur le rebord 521. Lorsque le patin cesse d'être sollicité (figure 5), le ressort latéral 52b reprend sa position de repos en opérant un recul "r" du patin par rapport au disque. Au fur et à mesure de l'usure "u" du matériau de friction F, le patin avance en direction du disque, ce que représente la figure 6, homologue de la figure 4. Le retrait du patin usé pour son remplacement opère une déformation du ressort 52b de sens inverse de celle que subit ce dernier lors d'un freinage.

Comme le montrent encore les figures 3 à 7, chaque oreille de patin peut être protégée par une coupelle cylindrique telle que 6b réalisée en un matériau inoxydable et maintenue sur la première face du patin, telle que 421, par le rivet 520.

Dans le mode de réalisation préféré de l'invention, le cylindre 3 est engagé dans une bague 23 solidaire de la chape 2 (figures 9 et 11) et par rapport à laquelle ce cylindre peut coulisser sous l'effet d'un effort de freinage.

Par exemple, la position axiale du cylindre 3 par rapport à la bague 23 est fixée par un ressort circulaire 7, solidaire de la bague suivant la direction axiale A, enserrant le cylindre 3, et permettant néanmoins un coulissement de ce dernier lors d'un freinage.

Comme le montre la figure 11, le fond 3a du cylindre 3 prend appui sur le fond 11 de l'étrier, disposé du côté opposé au nez 10 de ce dernier, l'entrée de pression 32 du cylindre 3 traversant une ouverture 11a du fond 11, et se trouvant solidarisé à ce fond par un organe de verrouillage 8.

Grâce à cet arrangement, le cylindre adopte toujours, par rapport à la bague 23, une position qui permet le rattrapage de l'usure "u" de la garniture F des patins.

Par ailleurs, dans la mesure où les oreilles 42a, 42b du second patin 42 sont engagées dans les logements 22a, 22b de la chape 2, il suffit, pour maintenir l'étrier, de solidariser ce dernier au second patin suivant la direction radiale R.

Pour ce faire, comme le montrent les figures 1, 2 et 11, l'étrier 1 est accroché de façon amovible au second patin 42 au moyen d'un ressort central 9.

Plus précisément, l'étrier 1 présente, dans sa partie centrale, une fente axiale 12 (figures 1 et 10) traversée par deux protubérances telles que 423 du second patin 42 ou 413 et 414 du premier patin 41, et le ressort central 9 est accroché sur ces protubérances et prend appui sur les bords 12a, 12b de la fente 12.

Dans ces conditions, la partie centrale de l'étrier 1 repose librement sur la bague 23, le guidage de l'étrier par rapport à la chape étant assuré par le maintien du fond 11 de l'étrier sur l'entrée de pression 32 et du nez 10 de l'étrier sur le second patin 42, ce dernier étant lui-même guidé dans la chape.

## Revendications

1. Dispositif de freinage pour véhicule à moteur, incluant au moins un patin (41, 42) à deux faces (411, 412; 421, 422) sensiblement planes dont la première (411, 421) est partiellement recouverte, dans une plage centrale (P), d'un matériau de friction (F), ce patin comportant en outre, de part et d'autre de cette plage centrale, deux oreilles latérales (41a, 41b; 42a, 42b) présentant chacune, suivant une première direction (R) sensiblement perpendiculaire à une seconde direction (S) joignant ces oreilles, une largeur (L1) relativement importante, la plage centrale (P) étant reliée aux deux oreilles par des zones de liaison respectives (Z) présentant, suivant la première direction (R), une largeur (Lo) relativement faible de sorte que chaque oreille (41a, 41b; 42a, 42b) présente en dehors de la zone de liaison une périphérie supérieure à la largeur (Lo) de cette zone, caractérisé en ce que chaque oreille (41a, 41b; 42a, 42b) de ce patin est de forme circulaire et porte, sur sa seconde face (412, 422) au moins, un ressort latéral (51a, 51b; 52a, 52b) de patin qui prend essentiellement la forme d'une étoile comportant au moins trois branches, qui est relié à cette oreille par sa partie centrale (C) et qui déborde de la périphérie de cette oreille en au moins deux points (521, 522) espacés l'un de l'autre le long de cette périphérie.

2. Dispositif de freinage comprenant des premier et second patins de friction suivant la revendication 1, caractérisé en ce qu'il comprend en outre : deux éléments de frein (1, 2) mobiles l'un par rapport à l'autre, dont l'un est un étrier (1) chevauchant un disque de frein (D), et dont l'autre est une chape (2) fixée au véhicule; des moyens de serrage comprenant un cylindre (3) prenant appui sur l'étrier et présentant en regard d'une première (D1) des deux faces du disque une ouverture (30) fermée par un piston (31); et des moyens de guidage (21a, 21b; 22a, 22b) permettant un coulissement de l'étrier par rapport à la chape lors d'un actionnement des moyens de serrage, les premier et second patins de friction (41, 42) étant respectivement tournés vers les première et seconde faces (D1, D2) du disque, étant enserrés entre le piston et l'étrier, et étant déplacés suivant une troisième direction (A) par actionnement des moyens de serrage pour être appliqués sur le disque, et en ce que les oreilles (41a, 41b; 42a, 42b) de l'un au moins des patins sont encastrées dans des logements respectifs (21a, 21b; 22a, 22b) de la chape, dont chacun s'étend suivant la troisième direction et présente une ouverture tournée vers la seconde direction (S) et de dimension (L2) inférieure à celle de la largeur (L1) de l'oreille qu'il reçoit.

3. Dispositif de freinage suivant la revendication 2, caractérisé en ce que le cylindre est engagé dans une bague (23) solidaire de la chape (2) et par rapport à laquelle ce cylindre peut coulisser sous l'effet d'un effort de freinage.

4. Dispositif de freinage suivant la revendication 3, caractérisé en ce que l'étrier (1) est accroché de façon amovible au second patin (42) pour être solidaire de ce dernier suivant la première direction (R), radialement par rapport au disque, les oreilles (42a, 42b) du second patin étant engagées dans lesdits logements (22a, 22b) de la chape.

5. Dispositif de freinage suivant la revendication 4, caractérisé en ce que l'étrier (1) présente une fente (12) s'étendant suivant la troisième direction (A), en ce que le second patin (42) présente au moins une protubérance (423) traversant cette fente, et en ce qu'un ressort central (9) accroché sur cette protubérance prend appui sur un bord (12a, 12b) de la fente.

6. Dispositif de freinage suivant l'une quelconque des revendications 3 à 5, caractérisé en ce que l'étrier (1) repose librement sur la bague (23).

7. Dispositif de freinage suivant la revendication 6, caractérisé en ce que le ressort en étoile est riveté en son centre (C) au patin au moyen d'un rivet (520) présentant, du côté du ressort au moins, un rebord (521) distant du ressort dans la position de repos de ce dernier, et servant à limiter la déformation de ce ressort.

8. Dispositif de freinage suivant l'une quelconque des revendications précédentes, caractérisé en ce que chaque oreille (41a, 41b; 42a, 42b) de patin est protégée par une coupelle cylindrique (6b) réalisée en un matériau inoxydable et maintenue sur la première face du patin (421).

## Patentansprüche

1. Bremsvorrichtung für ein Kraftfahrzeug, mit wenigstens einem Bremsklotz (41, 42) mit zwei im wesentlichen ebenen Seiten (411, 412; 421, 422), von denen die erste (411, 421) teilweise in einem Mittelbereich (P) von einem Reibmaterial (F) bedeckt ist, wobei dieser Bremsklotz außerdem auf der einen und der anderen Seite dieses Mittelbereichs zwei seitliche Augen (41a, 41b; 42a, 42b) aufweist, die jeweils entlang einer ersten Richtung (R), die im wesentlichen senkrecht zu einer diese beiden Augen miteinander verbindenden zweiten Richtung (S) ist, eine relativ große Breite (L1) haben, wobei der Mittelbereich (P) mit den beiden Augen durch entsprechende Verbindungsbereiche (Z) verbunden ist, die entlang der ersten Richtung (R) eine relativ geringe Breite (Lo) aufweisen, so daß jedes Auge (41a, 41b; 42a, 42b) außerhalb des Verbindungsbereichs einen Umfang aufweist, der größer als die Breite (Lo) dieses Bereichs ist, dadurch gekennzeichnet, daß jedes Auge (41a, 41b; 42a, 42b) dieses Bremsklotzes kreisförmig ist und auf seiner zweiten Seite (412, 422) wenigstens eine seitliche Bremsklotz-Feder (51a, 51b; 52a, 52b) enthält, die im wesentlichen die Form eines Sterns mit wenigstens drei Armen hat und die mit diesem Auge mit ihrem Mittelabschnitt (C) verbunden ist und über den Umfang dieses Auges an wenigstens zwei Stellen (521, 522) übersteht, die entlang diesem Umfang voneinander beabstandet sind.

2. Bremsvorrichtung mit einem ersten und einem zweiten Reib-Bremsklotz nach Anspruch 1, dadurch gekennzeichnet, daß sie außerdem enthält: zwei Bremselemente (1, 2), die zueinander beweglich sind und von denen einer ein eine Bremsscheibe (D) umgreifender Bremssattel (1) und von denen der andere ein am Fahrzeug befestigter Bügel (2) ist; Spannmittel, die einen Zylinder (3) enthalten, der sich am Bremssattel abstützt und gegenüber einer ersten (D1) der beiden Seiten der Scheibe eine Öffnung (30) aufweist, die von einem Kolben (31) verschlossen ist; und Führungsmittel (21a, 21b; 22a, 22b), die ein Verschieben des Bremssattels bezüglich des Bügels bei einer Betätigung der Spannmittel ermöglichen, wobei der erste und der zweite Reib-Bremsklotz der ersten bzw. der zweiten Seite (D1, D2) der Scheibe zugewandt sind, zwischen dem Kolben und dem Bremssattel eingespannt sind und durch Betätigung der Spannmittel entlang einer dritten Richtung (A) verstellt werden, um an die Scheibe angelegt zu werden, und daß die Augen (41a, 41b; 42a, 42b) von wenigstens einem der Bremsklötze in entsprechende Aufnahmen (21a, 21b; 22a, 22b) des Bremssattels eingelassen sind, von denen sich jede entlang der dritten Richtung erstreckt und eine Öffnung aufweist, die in der zweiten Richtung (S) gerichtet ist und deren Abmessung (L2) kleiner als die Breite (L1) des von ihr aufgenommenen Auges ist.

3. Bremsvorrichtung nach Anspruch 2, dadurch gekennzeichnet, daß der Zylinder in einem Ring (23) angebracht ist, der fest mit dem Bügel (2) verbunden ist und bezüglich welchem der Zylinder unter der Wirkung einer Bremskraft verschiebbar ist.

4. Bremsvorrichtung nach Anspruch 3, dadurch gekennzeichnet, daß der Bremssattel (1) lösbar am zweiten Bremsklotz (42) angehängt ist, um mit diesem entlang der ersten Richtung (R), die bezüglich der Scheibe radial ist, fest verbunden zu sein, wobei die Augen (42a, 42b) des zweiten Bremsklotzes in die Aufnahmen (22a, 22b) des Bügels eingreifen.

5. Bremsvorrichtung nach Anspruch 4, dadurch gekennzeichnet, daß der Bremssattel (1) einen Schlitz aufweist, der sich entlang der dritten Richtung (A) erstreckt, daß der zweite Bremsklotz (42) wenigstens einen Fortsatz (423) aufweist, der diesen Schlitz durchquert, und daß eine Mittelfeder (9), die an diesem Fortsatz angehängt ist, an einem Rand (12a, 12b) des Schlitzes anliegt.

6. Bremsvorrichtung nach einem der Ansprüche 3 bis 5, dadurch gekennzeichnet, daß der Bremssattel (1) frei auf dem Ring (23) ruht.

7. Bremsvorrichtung nach Anspruch 6, dadurch gekennzeichnet, daß die sternförmige Feder in ihrer Mitte (C) mit dem Bremsklotz durch ein Niet (520) vernietet ist, das wenigstens auf der Seite der Feder einen Rand (521) aufweist, der in der Ruhestellung der Feder von dieser beabstandet ist und dazu dient, die Verformung der Feder zu begrenzen.

8. Bremsvorrichtung nach einem der vorhergehenden Ansprüche, dadurch gekennzeichnet, daß jedes Auge (41a, 41b; 42a, 42b) des Bremsklotzes von einer zylindrischen Kapsel (6b) geschützt wird, die aus einem nichtrostenden Material hergestellt ist und auf der ersten Seite (421) des Bremsklotzes gehalten wird.

## Claims

1. Braking device for a motor vehicle including at least one pad (41, 42) having two substantially flat faces (411, 412; 421, 422) the first (411, 421) of which is partially covered, in the central region (P), with a friction material (S), this pad further including, on either side of this central region, two lateral ears (41a, 41b; 42a, 42b) each having a relatively large width (L1), in a first direction (R) substantially perpendicular to the second direction (S) joining these ears, the central region (P) being connected to the two ears by respective connection zones (Z) having a relatively small width (Lo) in the first direction (R) so that outside of the connection zone each ear (41a, 41b; 42a, 42b) has a periphery which is greater than the width (Lo) of this zone, characterized in that each ear (41a, 41b; 42a, 42b) of this pad has a circular shape and carries, on its second face (412, 422) at least, a lateral pad spring (51a, 51b; 52a, 52b)which has essentially the shape of a star comprising at least three branches and, which is connected to this ear by a central part (C) and which overhangs the periphery of this ear at least at two points (521, 522) which are spaced apart from one another along this periphery.

2. Braking device comprising first and second friction pads according to Claim 1, characterized in that it further comprises: two brake elements (1, 2) which can move with respect to each other, one of which is a caliper (1) straddling a brake disc (D), and the other of which is a carrier (2) fixed to the vehicle; clamping means comprising a cylinder (3) bearing on the caliper and having, facing a first (D1) of the two faces of the disc, an opening (30) closed by a piston (31); and guide means (21a, 21b; 22a, 22b) allowing the caliper to slide with respect to the carrier when the clamping means are actuated, the first and second friction pads (41, 42) pointing respectively towards the first and second faces (D1, D2) of the disc, being trapped between the piston and the caliper, and moved in a third direction (A) by actuation of the clamping means in order to be applied to the disc, and that in the ears (41a, 41b; 42a, 42b) or at least one of the pads are set into respective housings (21a, 21b; 22a, 22b) of the carrier, each of which extends in the third direction and has an opening pointing in the second direction (S) and of size (L2) less than that of the width (L1) of the ear which it receives.

3. Braking device according to Claim 2, characterized in that the cylinder is engaged in a ring (23) integral with the carrier (2) and with respect to which the cylinder can slide under the effect of a braking force.

4. Braking device according to Claim 3, characterized in that the caliper (1) is fastened removably to the second pad (42) in order to be secured to the latter in the first direction (R), radially with respect to the disc, the ears (42a, 42b) of the second pad being engaged in the said housings (22a, 22b) of the carrier.

5. Braking device according to Claim 4, characterized in that the caliper (1) has a slit (12) extending in the third direction (A), in that the second pad (42) has at least one projection (423) passing through this slit, and in that a central spring (9) fastened to this projection bears on an edge (12a, 12b) of the slit.

6. Braking device according to any one of Claims 3 to 5, characterized in that the caliper (1) rests freely on the ring (23).

7. Braking device according to Claim 6, characterized in that the star-shaped spring is riveted at its centre (C) to the pad by means of a rivet (520) which, on the same side of the spring, at least, has a rim (521) which is distant from the spring in the latter's position of rest, and which serves to limit the deformation of the spring.

8. Braking device according to any one of the preceding claims, characterized in that each pad ear (41a, 41b; 42a, 42b) is protected by a cylindrical cup (6b) made from a rustproof material and held on the first face of the pad (421).
